# EUROPÄISCHE PATENTSCHRIFT

(11) **EP 3 144 436 B1**
(45) Veröffentlichungstag und Bekanntmachung des Hinweises auf die Patenterteilung: **10.06.2020**
(21) Anmeldenummer: 16001893.3
(22) Anmeldetag: 30.08.2016
(51) Int. Cl.: E03D 5/10, E03C 1/05

(54) **VERFAHREN UND ANORDNUNG ZUM BETRIEB EINER SANITÄREINRICHTUNG**
METHOD AND ASSEMBLY FOR OPERATING A SANITARY DEVICE
PROCEDE ET SYSTEME DE FONCTIONNEMENT D'UN DISPOSITIF SANITAIRE

(30) Priorität: 04.09.2015 DE 102015011386
(43) Veröffentlichungstag der Anmeldung: 22.03.2017
(73) Patentinhaber: Grohe AG, 58675 Hemer (DE)
(72) Erfinder: Schönbeck, Heiko, 58675 Hemer (DE); Mielke, Achim, 32457 Porta Westfalica (DE)

(56) Entgegenhaltungen:
- WO-A1-99/04283
- DE-U1- 20 014 027
- US-A1- 2015 020 299

## Beschreibung

Die vorliegende Erfindung betrifft ein Verfahren zum Betrieb einer Sanitäreinrichtung sowie eine Anordnung, umfassend mindestens eine Sensoreinrichtung und eine Sanitäreinrichtung. Insbesondere werden ein Verfahren und eine Anordnung beschrieben, mit der ein automatischer beziehungsweise bedarfsorientierter Betrieb der Sanitäreinrichtung ermöglicht wird, insbesondere der Initiierung zeitlich der Benutzung der Sanitäreinrichtung vorlaufender und/oder nachlaufender Aktionen.

In zunehmendem Maße wünscht der Anwender von Sanitäreinrichtungen, dass vollständig selbständig zusätzliche Funktionen beziehungsweise Aktionen bei Sanitäreinrichtungen vorlaufend und/oder nachlaufend der eigentlichen Benutzung durchgeführt werden. So kann es beispielsweise wünschenswert sein, dass bei einem Wasserklosett der Deckel angehoben, die Sitzauflage vorgewärmt und/oder desinfiziert, oder eine Reinigung durchgeführt wird. Bei Duschen kann gewünscht sein, dass die Strahldüse, die Strahlform, die Beleuchtung der Duschkabine, die Fußbodenheizung etc. bedarfsorientiert und damit energie- und wasserschonend betrieben wird. Bei einem Waschtisch ist beispielsweise gewünscht, dass selbständig erkannt wird, welcher Wasseranschluss von einer Mehrzahl von Wasseranschlüssen nun für einen berührungslosen Betrieb ausgewählt wird. Auch hinsichtlich eines Urinals gibt es ähnliche Anforderung, wie dies bereits im Zusammenhang mit dem Wasserklosett vorab beschrieben ist.

Die WO 99/04283 A beschreibt ein System zum Steuern einer Sanitärarmatur mit mehreren Sensoren, die jeweils mit einem Empfänger und eine Steuerung versehen und so gekoppelt sind, dass in Reaktion auf die empfangenen Signale ein Steuersignal erzeugt werden kann. Insbesondere wird ein Verfahren zum Steuern von Sanitärarmaturen beschrieben, wobei auf Basis von Erfassungssignalen der Sensoren von einer zentralen Steuerung ausgewählte Aktuatoren der Sanitärarmaturen bedient werden.

Die US2015020299A1 betrifft eine intelligente Toilette mit mehreren Erfassungsfeldern, die mit zwei oder mehr elektrische Felder mit kapazitiver Näherungserfassung gebildet sind. Eine Spülsteuereinheit der Toilette, die Näherungskapazitätserfassungsinformationen empfängt, kann dabei die Schüsselbereichsspülung gemäß einer oder mehreren logischen Verknüpfungen steuern.

Für die Durchführung derartiger Funktionen beziehungsweise Aktionen durch die Sanitäreinrichtung ohne konkrete Mitwirkung durch den Anwender, wie beispielsweise die Betätigung von Tasten, sind bereits Sensorelemente vorgeschlagen worden, die einen Teil dieser Funktion selbständig auslösen können. So sind insbesondere Distanzsensoren, Berührungssensoren und/oder Bewegungssensoren vorgestellt worden. Nachteilig ist bezüglich dieser Sensoren jedoch, dass diese vielfach nur binäre Signale liefern, also entweder den Zustand "Ein" oder den Zustand "Aus". Das heißt mit anderen Worten, um die oben aufgezeigten Sanitäreinrichtungen vollumfassend steuern zu können, müssen komplizierte, teils unnatürliche oder unkomfortable Bedienkonzepte umgesetzt werden und/oder es muss eine Vielzahl von Sensoren eingesetzt werden.

Hiervon ausgehend ist es Aufgabe der vorliegenden Erfindung, die mit Bezug auf den Stand der Technik geschilderten Probleme zumindest teilweise zu lösen. Insbesondere soll ein Verfahren zum Betrieb einer Sanitäreinrichtung angegeben werden, wobei mit geringerem technischen Aufwand, ggf. unter Vermeidung von besonderen negativen Umgebungseinflüssen, eine bedarfsgerechte und/oder automatische Durchführung dieser "Servicefunktionen" bei Sanitäreinrichtungen ermöglicht wird. Dabei soll die Anordnung hierzu besonders eingerichtet sein, so dass insbesondere auch mit Bezug auf einen möglichst einfachen technischen Aufbau sowie eine robuste Signalauswertung gewährleistet sein soll. Zudem ist es wünschenswert, hierbei so vorzugehen, dass sich das Verfahren gegebenenfalls an Veränderungen im Umgebungsbereich der Sanitäreinrichtung selbständig anpasst.

Diese Aufgaben werden gelöst mit einem Verfahren zum Betrieb einer Sanitäreinrichtung gemäß den Merkmalen des Patentanspruchs 1 sowie einer Anordnung mit den Merkmalen gemäß Patentanspruch 7. Weitere vorteilhafte Ausgestaltungen sind in den abhängig formulierten Patentansprüchen angegeben. Es ist darauf hinzuweisen, dass die Beschreibung, insbesondere im Zusammenhang mit den Figuren, weitere vorteilhafte Ausgestaltungen aufzeigt, die auch miteinander kombiniert werden können.

Zur Lösung der oben genannten Aufgabe trägt ein Verfahren zum Betrieb einer Sanitäreinrichtung mit mindestens einer Sensoreinrichtung bei, wobei die Sanitäreinrichtung, eine Kontrolleinheit zur Einstellung mindestens eines Stellglieds der Sanitäreinrichtung hat, wobei die Sensoreinrichtung eine Messeinheit zur Feststellung von Umgebungssituationen der Sanitäreinrichtung hat, wobei die Messeinheit mit der Kontrolleinheit datenleitend verbunden ist, wobei die Sensoreinrichtung eine Mehrzahl von Infrarot-LED Lichtemittern, die mehrere Zonen der Umgebung der Sanitäreinrichtung separat erreichen kann, und mindestens einen Lichtempfänger umfasst.

Das Verfahren umfasst zumindest die folgenden Schritte umfasst:
a) Festlegen von mehreren Zonen einer Umgebung der Sanitäreinrichtung;
b) Erfassen einer aktuellen Umgebungssituation mittels einer Sensoreinrichtung;
c) Festlegen einer Standard-Umgebungssituation;
d) Überwachen der mehreren Zonen mittels der Sensoreinrichtung;
e) Auslösen einer Aktion der Sanitäreinrichtung, wenn mit Schritt d) eine charakterisierbare Änderung der Umgebungssituation erfasst wird.

Das Verfahren hat insbesondere zum Gegenstand, selbständig beziehungsweise automatisch Aktionen vor, während und/oder nach der eigentlichen Benutzung der Sanitäreinrichtung durchzuführen.

Bei der (erstmaligen Inbetriebnahme oder einer wiederholten) Einrichtung des Verfahrens beziehungsweise gegebenenfalls zu vorgegebenen Zeitpunkten wird gemäß Schritt a) bevorzugt eine sogenannte Umgebungsanalyse durchgeführt. Zu diesem Zweck wird der Umgebungsbereich in beziehungsweise um die Sanitäreinrichtung herum in mehrere Zonen unterteilt, die dann selbständig überwacht werden können. Bei den Zonen handelt es sich insbesondere um solche flächigen beziehungsweise räumlichen Areale der Umgebung, die sensorisch erfasst werden können, insbesondere durch getrennte beziehungsweise separat zuständige Sensoraggregate einer Sensoreinrichtung. Wesentlich ist, dass in einem Nah-Umgebungsbereich der Sanitäreinrichtung sowie in einem Fern-Umgebungsbereich der Sanitäreinrichtung jeweils eine Mehrzahl von Zonen eingerichtet wird. So können beispielsweise mindestens 2, 3 oder 4 Zonen, bevorzugt mindestens 12 Zonen oder sogar noch mehr Zonen, eingerichtet werden. Ganz besonders bevorzugt ist dabei, dass die Hälfte der Zonen den Nah-Umgebungsbereich und die andere Hälfte den Fern-Umgebungsbereich betrifft. Das Festlegen der Zonen kann unter Berücksichtigung der Umgebung der Sanitäreinrichtung eingestellt werden und/oder durch den Aufbau der Sensoreinrichtung fest vorgegeben sein. Die Zonen sind jeweils frei konfigurierbar und können sich bei Bedarf auch überschneiden.

Gemäß Schritt b) wird nun die aktuelle Umgebungssituation mittels einer Sensoreinrichtung erfasst. Dies umfasst insbesondere, dass mittels der Sensoreinrichtung jede der mehreren Zonen einzeln sensorisch erfasst wird. Dies dient insbesondere dem Zweck, Funktionsstörungen festzustellen und/oder festzuhalten, inwiefern die sensorisch erfasste Umgebung der Sanitäreinrichtung, beziehungsweise die mehreren Zonen durch bauliche Gegebenheiten (Wandvorsprünge, Mobiliar, Fenster, Dachschrägen, Vorhänge, etc.) nicht voll zugänglich sind. Insofern ist auch möglich, dass Schritt b) mehrfach durchgeführt wird, um hier Sicherheit über die aktuelle Umgebungssituation (ohne Anwender) zu erhalten.

Schritt c) hat zur Folge, dass die sogenannte Standard-Umgebungssituation festgelegt wird. Insbesondere wird diese Standard-Umgebungssituation für spätere Vergleiche und/oder als Basis für die nachfolgende Auswertung durch die Sensoreinrichtung gespeichert. Damit ist nunmehr klargestellt, welche Zonen in welchem Umfang frei für einen Anwender durchschritten werden können, beziehungsweise welche Standard-Messwerte von der Sensoreinrichtung erfasst werden sollen, wenn keine Benutzung der Sanitäreinrichtung ansteht.

Ist dieser vorbereitende und/oder überprüfende Prozess umfassend die Schritte a), b) und c) durchgeführt, kann der eigentliche Überwachungszeitraum beginnen. Dabei wird nun die Sensoreinrichtung genutzt, die mehreren Zonen zu überwachen. Die Überwachung verfolgt insbesondere das Ziel, dass Veränderungen innerhalb der mehreren Zonen zu veränderten Messergebnissen führen, die dann analysiert und ausgewertet werden können. Während Schritt d) ist somit die Sensoreinrichtung aktiv.

Wird nun mit Schritt d) eine charakterisierbare Änderung der Umgebungssituation erfasst, dann kann eine vorgegebene Aktion der Sanitäreinrichtung ausgelöst werden (Schritt e)). "Charakterisierbar" ist eine Änderung der Umgebungssituation insbesondere dann, wenn die Sensoreinrichtung beziehungsweise damit in Kontakt stehende Messeinheiten beziehungsweise Kontrolleinheiten in der Lage sind, die identifizierten Messwerte einem bestimmten Verhalten des Anwenders zuzuordnen, so dass eine gegebenenfalls dazu konkret ausgewählte Aktion durchgeführt wird. Mit zwei Beispielen soll dies kurz erläutert werden: So kann beispielsweis in Schritt c) festgelegt werden, wo sich bezüglich dieser Sanitäreinrichtung beziehungsweise dem Sanitärraum eine Eintrittstür und die Sanitäreinrichtung selbst befinden. Erfolgt nun aus der Überwachung gemäß Schritt d), dass ein Objekt sich von der Eintrittstür hin zur Sanitäreinrichtung bewegt, kann daraus geschlossen werden, dass die Sanitäreinrichtung demnächst benutzt wird, so dass beispielsweise ein WC-Deckel angehoben und/oder eine Vorreinigung durchgeführt wird. Greift beispielsweise ein Anwender zum Toilettenpapier, kann dies ebenfalls charakterisiert und eine weitere Aktion der Sanitäreinrichtung, beispielsweise ein Reinigungsprozess und/oder eine Geruchsabsaugung, eingeleitet werden.

Darüber hinaus ist wesentlich, dass in Schritt e) zumindest folgende Teilprozesse stattfinden:
i. Vergleichen der erfassten Änderung der Umgebungssituation mit vorgegebenen Änderungsschemata;
ii. Auswahl eines passenden Änderungsschema;
iii. Auswahl zumindest einer Aktion zur Betätigung der Sanitäreinrichtung in Abhängigkeit des ausgewählten passenden Änderungsschema.

Für diese Verfahrensvariante erfolgt also eine unmittelbare Interpretation der erfassten Änderung der Umgebungssituation anhand von vorgegebenen beziehungsweise im Rahmen des Betriebs der Sanitäreinrichtung erlernten Änderungsschemata. Die vorgegebenen Änderungsschemata können auch vor Ort erlernt sein. Hierzu können vom Anwender Bewegungsabläufe und/oder Gesten in einem "Lern-Modus" der Sensoreinrichtung vorgegeben werden, die dann zur Auswahl im späteren tatsächlichen Betrieb der Sanitäreinrichtung zur Verfügung stehen. Mit anderen Worten bedeutet das insbesondere auch, dass die von der Sensoreinrichtung erfasste Änderung der Umgebungssituation nachverfolgt beziehungsweise interpretiert wird und mit diversen abgelegten oder vorbekannten Änderungsschemata messtechnisch verglichen wird. Kommt es hier zu einer ausreichenden Übereinstimmung, wird ein konkretes (bereits gespeichertes oder abrufbares) Änderungsschema ausgewählt und die damit ebenfalls abgelegte beziehungsweise vorgehaltene Aktion zur Betätigung der Sanitäreinrichtung durchgeführt. Nur klarstellend sei darauf hingewiesen, dass die Betätigung der Sanitäreinrichtung nicht eine Einzelaktion sein muss, sondern auch gegebenenfalls mehrere, insbesondere zeitlich versetzte, Aktionen umfassen kann. Darüber ist wesentlich, dass das Überwachungsschema der Sensoreinrichtung dann in Abhängigkeit des ausgewählten und passenden Änderungsschemata angeglichen wird, insbesondere wenn erwartet wird, dass der Anwender sich anschließend in einer vorgegebenen Weise verhalten wird.

Gemäß einer bevorzugten Ausgestaltung des Verfahrens wird vorgeschlagen, dass in Schritt b) und in Schritt d) mehrere Zonen mit jeweils zugeordneten Sensoraggregaten der Sensoreinrichtung gescannt werden. Das heißt insbesondere, dass die Sensoraggregate berührungslos arbeiten und ein Sensoraggregat nur einem Teil der tatsächlich vorgesehenen mehreren Zonen konkret zugewiesen ist. Insbesondere ist vorgesehen, dass ein Sensoraggregat eine Zone, zwei Zonen oder maximal drei Zonen überwacht beziehungsweise scannt. Insofern kann eine zonengerechte Analyse der Umgebungssituation der Sanitäreinrichtung erfolgen.

Weiter wird auch vorgeschlagen, dass mehrere Zonen mit der Sensoreinrichtung zeitlich versetzt gescannt werden. Dies heißt mit anderen Worten beispielsweise, dass mehrere Zonen in einer Ebene der Umgebung der Sanitäreinrichtung vorgesehen sind, die insbesondere zueinander benachbart angeordnet sind. Die Ansteuerung der jeweils zuständigen Sensoraggregate kann dabei zeitlich versetzt erfolgen, so dass die Ebenen zonenweise, insbesondere von einer Zone zur benachbarten Zone, überwacht beziehungsweise gescannt werden. Hierbei kann es sich beispielsweise um einen Standard-Scanprozess handeln, für den Fall, dass aktuell kein bewegtes Objekt in den mehreren Zonen festgestellt wird. Die Reihenfolge beziehungsweise der Häufigkeit der Erfassung von Messdaten innerhalb einer Zone beziehungsweise von benachbarten Zonen kann dann angepasst werden, wenn eine entsprechende Veränderung in konkreten Zonen aktuell gegeben ist. Dieses Verfahren bietet sich insbesondere dann an, wenn die Sensoraggregate auf einen gemeinsamen Empfänger beziehungsweise eine gemeinsame Messeinheit zugreifen.

Weiter wird auch vorgeschlagen, dass die charakterisierbare Änderung eine Bewegung oder Geste eines Anwenders der Sanitäreinrichtung ist. Unter einer "Bewegung" des Anwenders wird hier die für die Benutzung der Sanitäreinrichtung übliche Bewegungsfolge verstanden. Dies betrifft beispielsweise das Zulaufen auf beziehungsweise in die Sanitäreinrichtung, das Greifen nach Zubehörmitteln (Seifenspender, Trockner, Lichtschalter etc.) und/oder das Verweilen des Anwenders an einer vorgegebenen Position in der Umgebung der Sanitäreinrichtung. Unter einer "Geste" des Anwenders wird beispielsweise eine vordefinierte Haltung des Anwenders, beispielsweise der Arme oder der Hände des Anwenders, verstanden, die konkret vorgegeben sind. Auf diese Weise können, beispielsweise durch Gesten, einzelne Befehle erkannt werden oder eine Auswahl aus einem Bedienmenü getroffen werden. Die Gesten können dabei innerhalb einer Zone oder auch zonenübergreifend definiert werden.

Darüber hinaus wird vorgeschlagen, dass Schritt d) die Aktivierung eines Stellglieds zur Bewegung eines Bauteils der Sanitäreinrichtung umfasst. Das Stellglied kann mechanischer und/oder elektronischer Art sein. Als Bauteil kommen einerseits Bauteile zur Versorgung, beziehungsweise Abgabe von Fluiden mittels der Sanitäreinrichtung in Betracht (wie z. B. Ventile, Thermostate, Erwärmungsvorrichtungen, Strahlbildner, etc.), aber auch externe Bauteile, die die Benutzung ermöglichen oder unterstützen. Solche externen Bauteile kann eine Lüftung, eine Heizung, ein Deckel, eine Klappe oder dergleichen sein.

Weiter wird auch vorgeschlagen, dass die Schritte b) und c) intermittierend wiederholt werden und Schritt d) häufiger oder kontinuierlich durchgeführt wird. Mit anderen Worten bedeutet das, dass die (messtechnische) Einrichtung des Systems gemäß der Schritte b) und c) in vorgegebenen Zeitabständen wiederholt wird. Damit ist beispielsweise feststellbar, ob neues Mobiliar in dem Raum aufgestellt oder bestehendes Mobiliar bewegt wurde. Zwischen einer Wiederholung der Schritte b) und c) liegen bevorzugt mehrere Stunden beziehungsweise mehrere Tage, so dass diese Verfahrensschritte ggf. auch mit einem Kalender abgestimmt werden können. Im Gegensatz dazu wird das Überwachen der mehreren Zonen bevorzugt kontinuierlich oder deutlich häufiger durchgeführt, beispielsweise mehrmals pro Minute oder sogar mehrmals pro Sekunde. Dabei ist auch möglich, dass es eine Initiierung des Schritts d) zuvor erforderlich ist, beispielsweise wenn das Licht im Raum eingeschaltet wird oder wenn eine Tür geöffnet wird, wobei sich daraus erkennen lässt, dass erst jetzt eine Benutzung der Sanitäreinrichtung bevorstehen könnte.

Gemäß einem weiteren Aspekt wird eine Anordnung vorgeschlagen, die mindestens eine Sensoreinrichtung und eine Sanitäreinrichtung umfasst. Die Sanitäreinrichtung hat eine Kontrolleinheit zur Einstellung (bzw. Regelung) mindestens eines Stellglieds der Sanitäreinrichtung. Die Sensoreinrichtung hat eine Messeinheit zur Feststellung von Umgebungssituationen der Sanitäreinrichtung. Die Messeinheit ist zudem mit der Kontrolleinheit (elektronisch bzw. elektrisch) datenleitend verbunden. Die Anordnung ist geeignet und eingerichtet, das hier vorgestellte Verfahren durchzuführen. Bei dieser Anordnung erfolgt insbesondere eine (räumliche) Trennung der Auswertung der Signale der Sensoreinrichtung. Während ein Messen beziehungsweise elektronisches Umwandeln von Messwerten innerhalb der Sensoreinrichtung mittels der Messeinheit erfolgt, werden diese Messdaten dann an eine Kontrolleinheit weitergegeben, die bevorzugt Teil der Sanitäreinrichtung selbst ist. In der Kontrolleinrichtung wird insbesondere der Schritt e) ausgeführt, wobei dort auch die vorstehend genannten Teilprozesse i., ii., und iii. bevorzugt ausgeführt werden. Damit erfolgt eine Analyse beziehungsweise Interpretation der Messwerte dann in der Kontrolleinheit der Sanitäreinrichtung. Die Kontrolleinheit kann dabei ein Element der einzelnen Sanitäreinrichtung oder auch eine übergeordnete Kontrolleinheit zur Benutzung beziehungsweise dem Betrieb mehrerer Sanitäreinrichtungen sein.

Die vorstehend erläuterten Sachverhalte im Zusammenhang mit dem Verfahren können gleichermäßen auch zur Charakterisierung der Anordnung herangezogen werden. Dies gilt umgekehrt auch für die nachfolgend vorgetragenen Hinweise zur Anordnung, die sinnfällig auch beim Verfahren Anwendung finden können.

Bei der Anordnung ist zudem vorgesehen, dass die Sensoreinrichtung eine Mehrzahl von Lichtemittern hat, die mehrere Zonen der Umgebung der Sanitäreinrichtung separat erreichen kann, und mindestens einen Lichtempfänger. Folglich ist ganz besonders bevorzugt, dass ein Lichtemitter für eine oder mehrere Zonen zuständig ist und diese (allein beziehungsweise separat) erreichen kann. Zudem ist dann ein (einzelner) Lichtempfänger vorgesehen, der die reflektierenden Lichtstrahlen aus der Umgebung der Sanitäreinrichtung dann aufnehmen und verarbeiten kann.

Die Sensoreinrichtung umfasst dabei Infrarot-LED als Lichtemitter.

Die Sensoreinrichtung ist insbesondere eingerichtet, auf Grundlage der Messung der Laufzeit von Lichtimpulsen, insbesondere von Licht von Leuchtdioden (LED) im sichtbaren oder infraroten Spektrum, die Position von Anwendern beziehungsweise Gegenständen in der Umgebung der Sanitäreinrichtung und bevorzugt auch deren Entfernung zur Sanitäreinrichtung beziehungsweise zur Sensoreinrichtung zu bestimmen. Hierbei erzeugen die LEDs bevorzugt einen sich erweiternden beziehungsweise diffusen Lichtstrahl, der einen breiteren Bereich (eine Zone) der Umgebung abdeckt. Der Lichtempfänger erfasst die von den Gegenständen beziehungsweise dem Anwender im Strahl der LED zurückgestreuten Lichtanteile und analysiert deren Signalform selbständig. Somit kann in den einzelnen Zonen des Lichtstrahls ein vorhandener Gegenstand beziehungsweise ein sich darin bewegender Anwender erkannt werden. Auf Grundlage der Dauer, die der Lichtstrahl benötigt, um vom jeweiligen Gegenstand beziehungsweise dem Anwender zum Lichtempfänger zurückzukehren (Laufzeit), wird die Entfernung beziehungsweise die Art der Bewegung ermittelt.

Die LEDs werden dabei insbesondere dazu genutzt, sehr kurze Lichtsignale, typischerweise 100.000 Impulse pro Sekunde, zu erzeugen. Das sogenannte *"time-of-flight"-*Prinzip besteht im Wesentlichen darin, die Zeit zu messen, die ein Lichtimpuls benötigt, um vom Lichtemitter zu einem Gegenstand beziehungsweise einem Anwender der Sanitäreinrichtung und von dort wieder zurück zum Lichtempfänger zu gelangen (Rundlaufzeit). Die Entfernung R des erkannten Gegenstands/ Anwenders wird auf Grundlage der gemessenen Rundlaufzeit T des Lichtimpulses anhand der einfachen Formel R = c T/2 n berechnet (c ist die Lichtgeschwindigkeit im Vakuum und n ist der Brechnungsindex des Mediums (Luft), in dem sich der Lichtimpuls ausbreitet). In Abhängigkeit von den Oberflächeneigenschaften des Gegenstands/Anwenders kommt es zur Absorption, Totalreflektion oder diffusen (gestreuten) Reflektion des emittierten Lichts. Dadurch trifft der Echo-Impuls mit unterschiedlicher Intensität am Lichtempfänger ein, die dort gemessen wird. Die gemessene Intensität ist folglich von der gemessenen Entfernung und dem Einfallswinkel abhängig, der mit Hilfe einer bilderfassenden Optik ermittelt werden kann, die den reflektierenden Lichtstrahl fokussiert. Insbesondere für die Anwendung im vorliegenden Fall, wonach die Sensoreinrichtung Infrarot-LED umfasst, kann die Zone beziehungsweise die Strahlbreite insbesondere mit folgenden Winkelbereichen ausgehend von einem zentralen Punkt in der Nachbarschaft der Sanitäreinrichtung gewählt werden: 3°, 9°, 18°, 24°, 34°.

Ganz besonders findet diese Lösung Anwendung bei einer Sanitäreinrichtung, welche aus folgender Gruppe ausgewählt ist: Wasserklosett, Dusche, Waschtisch, Urinal.

Die Erfindung sowie das technische Umfeld werden nachfolgend anhand der Figuren näher erläutert. Es ist darauf hinzuweisen, dass die Figuren besonders bevorzugte Ausführungsvarianten aufzeigen, die Erfindung jedoch nicht darauf beschränkt ist. Insbesondere können einzelne Merkmale der einen Figur mit Merkmalen einer anderen Figur kombiniert werden, soweit dies nicht explizit hier ausgeschlossen ist. Die Figuren sind schematisch und beispielhaft und zeigen:
- Fig. 1:: eine erste Ausführungsvariante einer Anordnung zur Durchführung des beschriebenen Verfahrens,
- Fig. 2:: eine zweite Situation einer Anordnung zur Durchführung des Verfahrens, und
- Fig. 3:: eine dritte Ausführungsvariante für eine Anordnung zur Durchführung des Verfahrens.

In den Figuren sind gleiche Bauteile mit gleichen Bezugszeichen versehen, so dass deren Erläuterungen auch für alle Figuren entsprechend anwendbar sind.

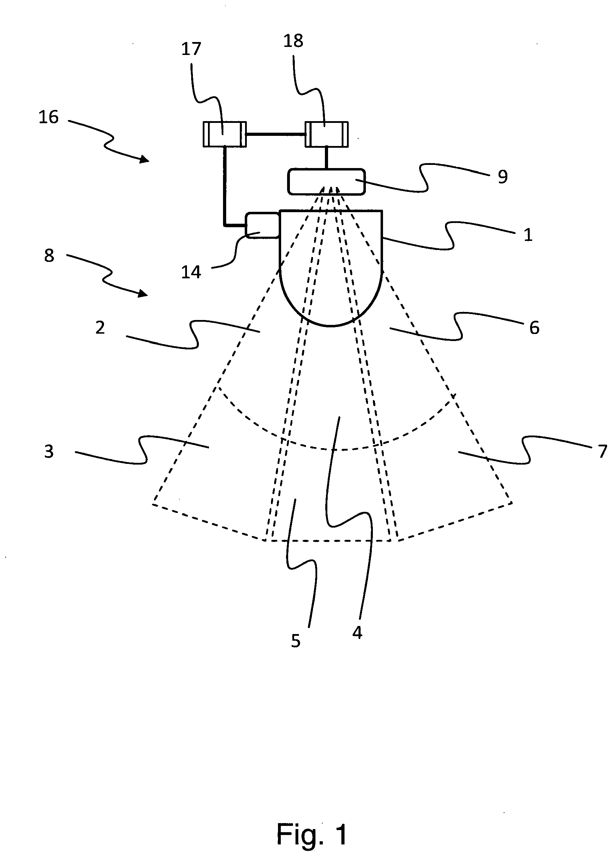

Fig. 1 zeigt eine Anordnung 16 zur Durchführung eines hier erläuterten Betriebsverfahrens einer Sanitäreinrichtung 1. Die Sanitäreinrichtung 1 ist hier nach Art eines Wasserklosetts dargestellt, das veranschaulichte Prinzip kann aber gleichermaßen auch auf eine Dusche, einen Waschtisch und/oder ein Urinal übertragen werden, ohne dass für den hier angesprochenen Sanitärfachmann besondere weiterführende Ergänzungen benötigt werden. Oberhalb der Sanitäreinrichtung 1 ist eine (zentrale) Sensoreinrichtung 9 vorgesehen, die eine Messeinheit 18 umfasst. Die Messeinheit 18 kann beispielsweise einen Mikroprozessor oder eine elektronische Datenverarbeitungseinheit umfassen. Die Messeinheit 18 ist datenleitend mit einer Kontrolleinheit 17 verbunden, die mit einem Stellglied 14 der Sanitäreinrichtung 1 verbunden ist. Die letztgenannte Verbindung kann wiederum elektrischer Natur sein, es wäre aber auch eine mechanische Kopplung möglich. Die Kontrolleinheit 17 kann beispielsweise einen Mikroprozessor oder eine elektronische Datenverarbeitungseinheit umfassen. Bei dem Bauteil 15 kann es sich beispielsweise um ein Heizelement für das Wasserklosett und/oder Deckelöffnungsvorrichtung handeln.

Darüber hinaus ist veranschaulicht, wie mittels der Sensoreinrichtung 9 mehrere Zonen sensorisch beziehungsweise messtechnisch erfasst werden können. So ist die Sensoreinrichtung 9 der Anordnung 16 derart ausgebildet, dass diese drei im Wesentlichen sich öffnende Zonen bilden, die jeweils in einen Nahbereich und in einen Fernbereich unterteilt sind. In Fig. 1 links dargestellt ist eine erste nahe Zone 2 und eine erste entfernte Zone 3. Benachbart dazu und im zentralen Bereich ist eine zweite nahe Zone 4 und eine zweite entfernte Zone 5 gebildet. Im rechten Bereich schließt der Überwachungsbereich wieder mit einer dritten nahen Zone 6 und einer dritten entfernten Zone 7. Die Sensoreinrichtung 9 ist nun so eingerichtet und ausgestattet, dass sie Gegenstände/Anwender, beziehungsweise Bewegungen innerhalb dieser Zonen 2, 3, 4, 5, 6, 7 ermitteln, beziehungsweise erfassen kann.

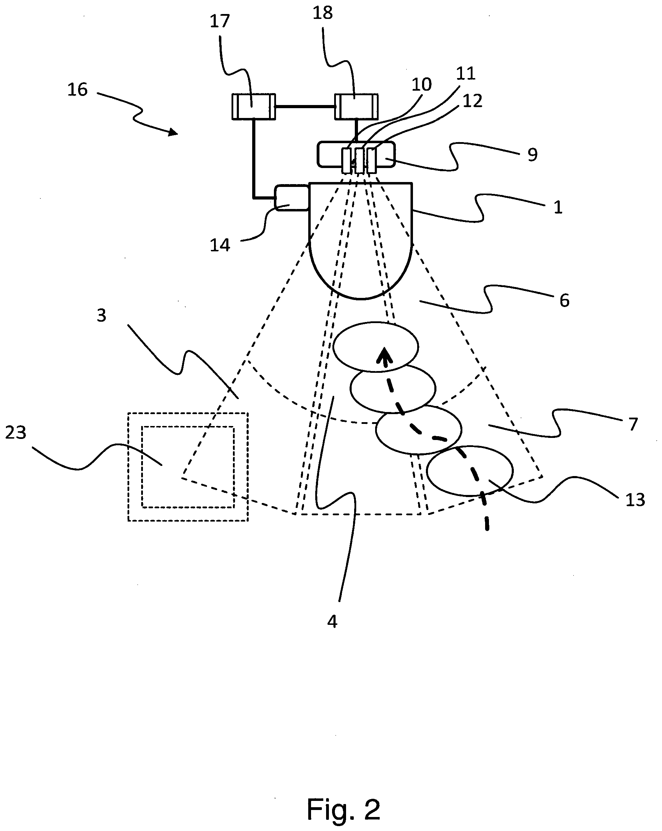

In Fig. 2 ist nun eine besondere Situation während der Benutzung dargestellt. Im linken Bereich der Fig. 2 ist veranschaulicht, dass die Anordnung 16 mit einer Sensoreinrichtung 9 ausgestattet ist, die für jeden Zonenbereich ein separates Sensoraggregat aufweist. So ist für die erste nahe/entfernte Zone ein erstes Sensoraggregat 10, für die zweite nahe/entfernte Zone ein zweites Sensoraggregat 11 und für die dritte nahe/entfernte Zone ein drittes Sensoraggregat 12 vorgesehen. Diese überwachen selbständig und unabhängig voneinander ihre Zonen. Links ist zu erkennen, dass im Bereich der ersten entfernten Zone 3 ein Gegenstand 23 platziert ist. Hierbei handelt es sich beispielsweise um einen Schrank im Bad, der also unbeweglich und zumindest für einen längeren Zeitraum unbeweglich dort platziert ist. Im Rahmen der Schritte a), b) und c) wird dies als ein unveränderlicher Gegenstand festgestellt und bleibt damit für die nachfolgende Auswertung beziehungsweise Überwachung gemäß Schritten d) und e) unberücksichtigt. Mit anderen Worten wird dieser Gegenstand 23 "blind" geschaltet.

Im rechten beziehungsweise zentralen Bereich ist nun veranschaulicht, wie sich ein Anwender 13 der Sanitäreinrichtung 1 nähert. Durch das Überwachen der Zonen 6, 7, 4, und insbesondere deren zeitliche Auswertung, realisiert die Messeinheit 18 eine charakteristische Änderung der Umgebungssituation (Schritt d)). Hiervon ausgehend vergleicht sie die erfasste Veränderung der Umgebungssituation mit einem beispielsweise in der Kontrolleinheit 17 abgelegten vorgegebenen Änderungsschemata, wobei dann eine Auswahl des passenden Änderungsschema erfolgt und über das Stellglied 14 dann eine in Abhängigkeit des identifizierten Änderungsschema vorzunehmende Aktion erfolgt, beispielsweise das Anheben des Deckels.

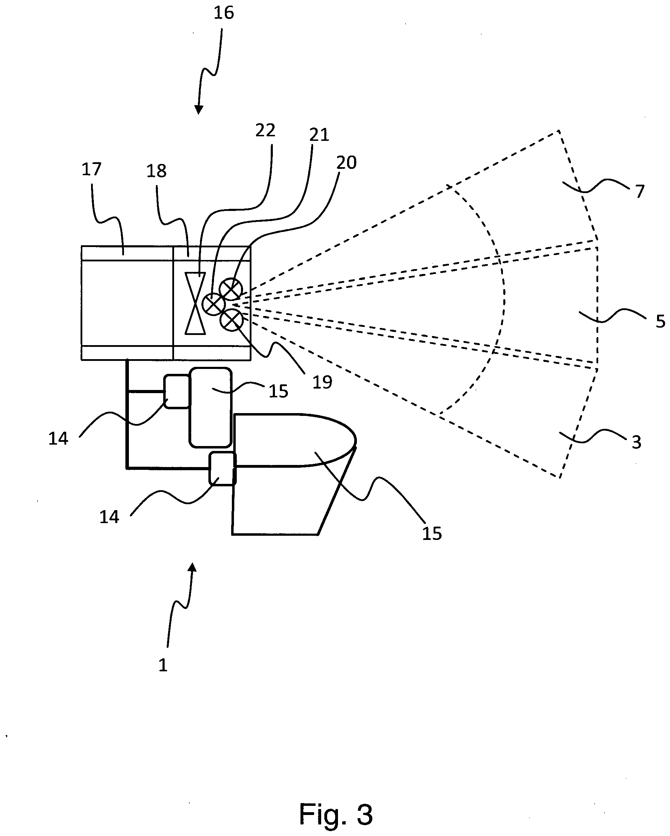

Fig. 3 veranschaulicht insbesondere die Situation, dass die Zonen nicht nur horizontal sondern gegebenenfalls auch vertikal ausgebildet sein können. Darüber hinaus veranschaulicht Fig. 3, dass die Sensoreinrichtung eine Mehrzahl von Lichtemittern (erster Lichtemitter 19, zweiter Lichtemitter 20, dritter Lichtemitter 21) und einen gemeinsamen Lichtempfänger 22 umfasst. Auch ist hier die Abwandlung dargestellt, dass Messeinheit 18 und Kontrolleinheit 17 unmittelbar miteinander zusammenwirken, beispielsweise auf einer gemeinsamen Datenverarbeitungsanlage. Die Ansteuerung von Stellgliedern 14 durch die Kontrolleinheit 17 kann dann bedarfsorientiert auf die unterschiedlichen Bauteile 15 der Sanitäreinrichtung 1 erfolgen. So kann beispielsweise ein Ventil für die Spülung, eine Bestromung der elektrischen Sitzheizung, die Initiierung der Luftabsaugung, das Auslösen von Duftstoffen, das Absenden von Unterhaltungsinformationen, etc. automatisch erfolgen.

Somit wurde hier ein Verfahren zum Betrieb einer Sanitäreinrichtung angegeben, welches mit geringerem technischen Aufwand, ggf. sogar unter Vermeidung von besonderen negativen Umgebungseinflüssen, eine bedarfsgerechte und/oder automatische Durchführung dieser "Servicefunktionen" bei Sanitäreinrichtungen ermöglicht. Die Anordnung ist so eingerichtet, dass ein einfacher technischer Aufbau, sowie eine robuste Signalauswertung gewährleistet sind. Zudem ist ermöglicht, dass sich das Verfahren an Veränderungen im Umgebungsbereich der Sanitäreinrichtung selbständig anpasst.

### Bezugszeichenliste

- 1: Sanitäreinrichtung
- 2: erste nahe Zone
- 3: erste entfernte Zone
- 4: zweite nahe Zone
- 5: zweite entfernte Zone
- 6: dritte nahe Zone
- 7: dritte entfernte Zone
- 8: Umgebung
- 9: Sensoreinrichtung
- 10: erstes Sensoraggregat
- 11: zweites Sensoraggregat
- 12: drittes Sensoraggregat
- 13: Anwender
- 14: Stellglied
- 15: Bauteil
- 16: Anordnung
- 17: Kontrolleinheit
- 18: Messeinheit
- 19: erster Lichtemitter
- 20: zweiter Lichtemitter
- 21: dritter Lichtemitter
- 22: Lichtempfänger
- 23: Gegenstand

## Patentansprüche

1. Verfahren zum Betrieb einer Sanitäreinrichtung (1) mit mindestens einer Sensoreinrichtung (9), wobei die Sanitäreinrichtung (1) eine Kontrolleinheit (17) zur Einstellung mindestens eines Stellglieds (14) der Sanitäreinrichtung (1) hat, wobei die Sensoreinrichtung (9) eine Messeinheit (18) zur Feststellung von Umgebungssituationen der Sanitäreinrichtung (1) hat, wobei die Messeinheit (18) mit der Kontrolleinheit (17) datenleitend verbunden ist, wobei die Sensoreinrichtung (9) eine Mehrzahl von Infrarot-LED Lichtemittern (19, 20, 21), die mehrere Zonen (2, 3, 4, 5, 6, 7) der Umgebung (8) der Sanitäreinrichtung (1) separat erreichen kann, und mindestens einen Lichtempfänger (22) umfasst, umfassend zumindest die folgenden Schritte:
a) Festlegen von mehreren Zonen (2, 3, 4, 5, 6, 7) einer Umgebung (8) der Sanitäreinrichtung (1), wobei in einem Nah-Umgebungsbereich der Sanitäreinrichtung (1) sowie in einem Fern-Umgebungsbereich der Sanitäreinrichtung (1) jeweils eine Mehrzahl von Zonen eingerichtet sind, und die Zonen mit einem von dem Infrarot-LED erzeugten, sich erweiternden Lichtstrahl gebildet werden;
b) Erfassen einer aktuellen Umgebungssituation mittels einer Sensoreinrichtung (9);
c) Festlegen einer Standard-Umgebungssituation;
d) Überwachen der mehreren Zonen (2, 3, 4, 5, 6, 7) mittels der Sensoreinrichtung (9);
e) Auslösen einer Aktion der Sanitäreinrichtung (1), wenn mit Schritt d) eine charakterisierbare Änderung der Umgebungssituation erfasst wird, wobei Schritt e) zumindest folgende Teilprozesse umfasst:
i. Vergleichen der erfassten Änderung der Umgebungssituation mit vorgegebenen, im Rahmen des Betriebs der Sanitäreinrichtung (1) erlernten Änderungsschemata;
ii. Auswahl eines passenden, gespeicherten oder abrufbaren Änderungsschema;
iii. Auswahl zumindest einer Aktion zur Betätigung der Sanitäreinrichtung (1) in Abhängigkeit des ausgewählten passenden Änderungsschema; und
iv. Angleichen des Überwachungsschema in Schritt d) in Abhängigkeit des ausgewählten passenden Änderungsschemata, wenn daraus erwartet werden kann, dass der Anwender sich anschließend in einer vorgegebenen Weise verhalten wird.

2. Verfahren nach Anspruch 1, bei dem in Schritt b) und in Schritt d) mehrere Zonen (2, 3, 4, 5, 6, 7) mit jeweils zugeordneten Sensoraggregaten (10, 11, 12) der Sensoreinrichtung (9) gescannt werden.

3. Verfahren nach Anspruch 1 oder 2, bei dem mehrere Zonen (2, 3, 4, 5, 6, 7) mit der Sensoreinrichtung (9) zeitlich versetzt gescannt werden.

4. Verfahren nach einem der vorhergehenden Ansprüche, bei dem die charakterisierbare Änderung eine Bewegung oder Geste eines Anwenders (13) der Sanitäreinrichtung (1) ist.

5. Verfahren nach einem der vorhergehenden Ansprüche, wobei Schritt e) die Aktivierung eines Stellglieds (14) zur Bewegung eines Bauteils (15) der Sanitäreinrichtung (1) umfasst.

6. Verfahren nach einem der vorhergehenden Ansprüche, wobei die Schritte b) und c) intermittierend wiederholt werden und Schritt d) häufiger oder kontinuierlich durchgeführt wird.

7. Anordnung (16), umfassend mindestens eine Sensoreinrichtung (9) und eine Sanitäreinrichtung (1), wobei die Sanitäreinrichtung (1) eine Kontrolleinheit (17) zur Einstellung mindestens eines Stellglieds (14) der Sanitäreinrichtung (1) hat, wobei die Sensoreinrichtung (9) eine Messeinheit (18) zur Feststellung von Umgebungssituationen der Sanitäreinrichtung (1) hat, wobei die Messeinheit (18) mit der Kontrolleinheit (17) datenleitend verbunden ist, wobei die Sensoreinrichtung (9) eine Mehrzahl von Infrarot-LED Lichtemittern (19, 20, 21), die mehrere Zonen (2, 3, 4, 5, 6, 7) der Umgebung (8) der Sanitäreinrichtung (1) separat erreichen kann, und mindestens einen Lichtempfänger (22) umfasst, und die Anordnung (16) geeignet und eingerichtet zur Durchführung eines Verfahrens nach einem der vorherigen Ansprüche ist.

8. Anordnung (16) nach Anspruch 7, wobei die Sanitäreinrichtung (1) aus folgender Gruppe ausgewählt ist: Wasserklosett, Dusche, Waschtisch, Urinal.

## Claims

1. A method for operating a sanitary device (1) with at least one sensor device (9), wherein the sanitary device (1) has a control unit (17) for adjusting at least one actuator (14) of the sanitary device (1), wherein the sensor device (9) has a measuring unit (18) for assessing environmental situations of the sanitary device (1), wherein the measuring unit (18) is connected to the control unit (17) such that data are carried, wherein the sensor device (9) comprises a plurality of infrared LED light emitters (19, 20, 21), which can reach multiple zones (2, 3, 4, 5, 6, 7) of the environment (8) of the sanitary device (1) separately, and at least one light receiver (22), said method comprising at least the following steps:
a) defining multiple zones (2, 3, 4, 5, 6, 7) of an environment (8) of the sanitary device (1), wherein a plurality of zones are established in a proximal environmental area of the sanitary device (1) and in a distal environmental area of the sanitary device (1), respectively, and the zones are formed with a widening light beam generated by the infrared LED;
b) detecting a current environmental situation by means of a sensor device (9);
c) defining a standard environmental situation;
d) monitoring the multiple zones (2, 3, 4, 5, 6, 7) by means of the sensor device (9);
e) triggering an action of the sanitary device (1) if a characterizable change of the environmental situation is detected in step d), wherein step e) comprises at least the following subprocesses:
i. comparing the detected change of the environmental situation with prespecified change schemata learned in the context of the operation of the sanitary device (1);
ii. selecting an appropriate stored or retrievable change scheme;
iii. selecting at least one action for actuating the sanitary device (1) in accordance with the selected appropriate change scheme;
iv. aligning the monitoring scheme in step d) in accordance with the selected appropriate change scheme, if it can be expected therefrom that the user will then act in a prespecified manner.

2. The method according to Claim 1, in which multiple zones (2, 3, 4, 5, 6, 7) are scanned with respectively associated sensor aggregates (10, 11, 12) of the sensor device (9) in step b) and in step d).

3. The method according to Claim 1 or 2, in which multiple zones (2, 3, 4, 5, 6, 7) are scanned at different times with the sensor device (9).

4. The method according to any one of the preceding claims, in which the characterizable change is a movement or gesture of a user (13) of the sanitary device (1).

5. The method according to any one of the preceding claims, wherein step e) comprises the activation of an actuator (14) for moving a component (15) of the sanitary device (1) .

6. The method according to any one of the preceding claims, wherein steps b) and c) are repeated intermittently and step d) is carried out more frequently or continuously.

7. An assembly (16) comprising at least one sensor device (9) and a sanitary device (1), wherein the sanitary device (1) has a control unit (17) for adjusting at least one actuator (14) of the sanitary device (1), wherein the sensor device (9) has a measuring unit (18) for assessing environmental situations of the sanitary device (1), wherein the measuring unit (18) is connected to the control unit (17) such that data are carried, wherein the sensor device (9) comprises a plurality of infrared LED light emitters (19, 20, 21), which can reach multiple zones (2, 3, 4, 5, 6, 7) of the environment (8) of the sanitary device (1) separately, and at least one light receiver (22), and the assembly (16) is suited and designed for carrying out a method according to any one of the preceding claims.

8. The assembly (16) according to Claim 7, wherein the sanitary device (1) is selected from the following group: WC, shower, wash stand, urinal.

## Revendications

1. Procédé, destiné à faire fonctionner un dispositif sanitaire (1) pourvu d'au moins un dispositif de capteurs (9), le dispositif sanitaire (1) ayant une unité de contrôle (17) destinée au réglage d'au moins un actionneur (14) du dispositif sanitaire (1), le dispositif de capteurs (9) ayant une unité de mesure (18), destinée à évaluer des situations environnantes du dispositif sanitaire (1), l'unité de mesure (18) étant connectée en transmission de données avec l'unité de contrôle (17), le dispositif de capteurs (9) comprenant une pluralité d'émetteurs lumineux (19, 20, 21) à LED infrarouge, susceptible d'atteindre séparément plusieurs zones (2, 3, 4, 5, 6, 7) de l'environnement (8) du dispositif sanitaire (1) et au moins un récepteur lumineux (22), comprenant au moins les étapes suivantes, consistant à :
a) déterminer plusieurs zones (2, 3, 4, 5, 6, 7) d'un environnement (8) du dispositif sanitaire (1), dans une région environnante proche du dispositif sanitaire (1) ainsi que dans une région environnante éloignée du dispositif sanitaire (1) étant aménagée respectivement une pluralité de zones, et les zones étant formées d'un faisceau lumineux s'élargissant, qui est généré par la LED infrarouge ;
b) détecter une situation environnante actuelle au moyen d'un dispositif de capteurs (9) ;
c) déterminer une situation environnante standard ;
d) superviser les plusieurs zones (2, 3, 4, 5, 6, 7) au moyen du dispositif de capteurs (9) ;
e) déclencher une action du dispositif sanitaire (1), si dans l'étape d), une modification caractéristique de la situation environnante est détectée, l'étape e) comprenant au moins les processus partiels suivants, consistant à :
i. comparer la modification détectée de la situation environnante avec des schémas de modifications prédéfinis, appris dans le cadre du fonctionnement du dispositif sanitaire (1) ;
ii. sélectionner un schéma de modification adapté mémorisé ou interrogeable ;
iii. sélectionner au moins une action destinée à actionner le dispositif sanitaire (1) en fonction du schéma de modification ; et
iv. ajuster le schéma de supervision dans l'étape d) en fonction des schémas de modification adaptés sélectionnés si l'on en attend que par la suite, l'utilisateur va se comporter d'une manière prédéfinie.

2. Procédé selon la revendication 1, lors duquel dans l'étape b) et dans l'étape d) on numérise plusieurs zones (2, 3, 4, 5, 6, 7) avec des groupes de capteurs (10, 11, 12) respectivement associés du dispositif de capteurs (9).

3. Procédé selon la revendication 1 ou 2, lors duquel on numérise avec un décalage dans le temps plusieurs zones (2, 3, 4, 5, 6, 7) avec le dispositif de capteurs (9).

4. Procédé selon l'une quelconque des revendications précédentes, lors duquel la modification susceptible d'être **caractérisée** est un déplacement ou un geste d'un utilisateur (13) du dispositif sanitaire (1).

5. Procédé selon l'une quelconque des revendications précédentes, l'étape e) comprenant l'activation d'un actionneur (14) pour le déplacement d'un élément structurel (15) du dispositif sanitaire (1).

6. Procédé selon l'une quelconque des revendications précédentes, les étapes b) et c) étant réitérées par intermittence et l'étape d) étant réalisée plus souvent ou en continu.

7. Ensemble (16), comprenant au moins un dispositif de capteurs (9) et un dispositif sanitaire (1), le dispositif sanitaire (1) ayant une unité de contrôle (17) pour le réglage d'au moins un actionneur (14) du dispositif sanitaire (1), le dispositif de capteurs (9) ayant une unité de mesure (18) pour déterminer des situations environnantes du dispositif sanitaire (1), l'unité de mesure (18) étant connectée en transmission de données avec l'unité de contrôle (17), le dispositif de capteurs (9) comprenant une pluralité d'émetteurs lumineux (19, 20, 21) à LED infrarouge, susceptible d'atteindre séparément plusieurs zones (2, 3, 4, 5, 6, 7) de l'environnement (8) du dispositif sanitaire (1), et au moins un récepteur lumineux (22), et l'ensemble (16) étant apte à et aménagé pour réaliser un procédé selon l'une quelconque des revendications précédentes .

8. Ensemble (16) selon la revendication 7, le dispositif sanitaire (1) étant sélectionné dans le groupe suivant, comprenant : toilettes, douche, lavabo, urinoir.
